# EUROPEAN PATENT SPECIFICATION

(11) **EP 2 576 124 B1**
(45) Date of publication and mention of the grant of the patent: **12.03.2014**
(21) Application number: 11721531.9
(22) Date of filing: 26.05.2011
(51) Int. Cl.: B23K 26/08, B23K 26/38, B23K 26/04, B65B 61/02

(54) **APPARATUS FOR MAKING PERFORATIONS IN A PACKAGING MATERIAL AND METHOD OF ADJUSTING SUCH AN APPARATUS**
VORRICHTUNG ZUR HERSTELLUNG VON PERFORATIONEN IN EINEM VERPACKUNGSMATERIAL UND VERFAHREN ZUM EINSTELLEN DER VORRICHTUNG
APPAREIL POUR RÉALISER DES PERFORATIONS DANS UN MATÉRIAU DE CONDITIONNEMENT ET PROCÉDÉ DE RÉGLAGE D'UN TEL APPAREIL

(30) Priority: 01.06.2010 EP 10164641
(43) Date of publication of application: 10.04.2013
(73) Proprietor: Perfo Knowledgy BV, 3230 AG Brielle (NL)
(72) Inventor: DE BRUIN, Martijn, Willem, NL-3628 BC Kockengen (NL)
(74) Representative: De Vries & Metman
(86) International application number: PCT/EP2011/058619
(87) International publication number: WO 2011/151245

(56) References cited:
- EP-A1- 1 857 812
- WO-A1-2006/063609
- US-A- 4 218 606

## Description

The invention relates to an apparatus according to the preamble of the claim 1, in particular a polymer film, comprising a conveyor for transporting the material along a path through the apparatus, e.g. from a supply reel to a take-up reel, a laser device, with adjustable focal point, and an in-line detector for measuring one or more parameters of the perforations made with the beam, in particular an optical detector such as a (digital) camera. The invention further relates to a method according to the preamble of the claim 10.

As explained in US 7 083 837 B, the quality and shelf life of many food products is enhanced by enclosing them in packaging that modifies or controls the atmosphere surrounding the product. Increased quality and longer shelf life result in fresher products for the consumer, less waste from spoiled produce, better inventory control, and appreciable overall savings for the food industry at both the retail and wholesale levels. The goal in fresh fruit and vegetable packaging is to use modified and controlled atmosphere packaging (MAP/CAP) to preserve produce quality by reducing aerobic respiration rate yet avoiding anaerobic processes that lead to adverse changes in texture, flavor, and aroma, as well as an increased public health concern. US 7 083 837 B discloses a microperforation system wherein a stationary laser beam drills the microperforations in a target area of a film, as the film is moving.

WO 02/12068 A relates to a method for packaging products prone to decay, wherein a synthetic foil is conveyed through a (laser) punching device, where perforations are punched in the synthetic foil, the perforated synthetic foil is formed as packages having the desired dimensions and these packages are filled with the products and closed. The perforation surface is set by controlling the number and size of the perforations. With the method according to WO 02/12068 A only a limited number of synthetic foils should be available in stock, since the perforations are only punched at the start of the packaging process.

EP 1 857 812 A relates to a quality control system for monitoring a parameter of holes formed in a film, especially a flexible packaging film. The system comprises a digital camera to form successive images of the holes in the film while the film is fed past the camera. These images are captured and parameters of the holes are analysed in an analyser so as to determine whether or not the parameters meet predetermined quality standards, and a warning is triggered by the analyser if the quality standards are not met. The warning signal may also be used to control the perforator so as to on-line correct for quality variations in hole size and frequency.

WO 2006/063609 A relates to a device for perforating a flexible film by means of a laser beam, comprising a laser beam generator, transport means for transporting the flexible film through the laser beam and focusing means for focussing the laser beam on the film surface. A detector is positioned along the path of movement of the flexible film for detecting whether the perforation has been made in the correct way.

WO2009/132663 A relates to a process for making perforations in a plastic film material to be used in a package for products prone to decay, in which the surface area of the perforations made in a defined surface area of the plastic film material must have a predetermined value. The process involves making one or more perforations, measuring the surface area of the perforation(s), calculating the difference between the predetermined value and the actual surface area and adjusting the number of perforations based on this difference.

US 4 218 606 B provides a system for controlling the porosity of a web or film as perforated by high intensity, coherent radiation. In particular, there is included a laser for providing at least one beam of high intensity, coherent radiation that is directed onto a web that is moved past the beam. The porosity of the web is measured and compared with an operator-set reference of porosity to control the focus of the coherent radiation, whereby the size of the resultant perforation and therefore the porosity of the web is controlled. In one embodiment of US 4 218 606 B, the position of a lens to focus the coherent radiation is adjusted. In a further embodiment, a support surface for receiving the web is adjusted with respect to the fixed focus laser beam to control the size of the perforation or opening created by the beam of coherent radiation.

The above publications relate to quality control during production. Prior to production, the perforating beam must be focused on the surface of the film. In practice, this is done by making perforations in a first part of the film, removing the film from the apparatus, checking the perforations under a microscope, adjusting focus, and repeating these steps until adequate focus is reached. This procedure may take up e.g. 20% of the total time needed to produce a batch of perforated film.

It is an object of the present invention to improve adjusting focus prior to production, in particular to reduce the time involved and preferably also to obtain more accurate focus.

To this end, the apparatus according to the invention is characterized by a controller connected to the laser device and the detector and arranged to adjust, preferably prior to production, the focal point of the laser device based on the parameter(s) measured by the detector.

Thus, the in-line detector already present in most cases is employed to focus the laser device and the time required to adjust focus is significantly reduced.

In an embodiment, the controller is arranged to vary the focal point of the laser device in a plurality of increments, typically discrete and equidistant positions, and operate the laser device to make at least one perforation at each increment. In a further embodiment, the controller is arranged to calculate an average and/or standard deviation of the values of the parameter(s) measured at each increment and/or over a range of increments. In particular, the increment where the standard deviation of the parameter, such as the diameter, surface area and/or circumference of the perforations, is smallest was found to provide good results during subsequent production.

In a relatively straightforward embodiment, the detector and the laser device are coupled such that their focal points are on a line that extends parallel to the packaging material. I.e., when the packaging material is in focus of the detector it is also in focus of the laser device.

In a further embodiment, the apparatus comprises a controller connected to the laser device and the detector and arranged to adjust the power of the laser device based on the parameter or one or more of the parameters. This controller and parameter(s) may be the same controller and parameter(s) as those employed for adjusting focus, but may as well be a different controller and/or parameter dedicated to at least this function.

Adjusting power in this way facilitates finer adjusting during production than, for instance, disclosed in WO 2009/132663 A.

In an embodiment, the controller is arranged to vary the power of the laser device in a plurality of increments and operate the laser device to make at least one perforation at each increment.

The invention also relates to a method of adjusting an apparatus as described above comprising the steps of making a plurality of perforations in the material by means of the laser device, measuring one or more parameters of the perforations with the in-line detector, and adjusting, preferably prior to production, the focal point of the laser device based on the parameter. The invention is realised by a method according to claim 10.

In an embodiment, the method comprises varying the focal point of the laser device in a plurality of increments, typically positions relative to the packaging material, determining at which increment the packaging material is in focus of the beam, and adjusting the focal point of the laser device to that increment.

The invention will now be explained in more detail with reference to the Figures, in which
Fig. 1 shows an apparatus for making perforations in a packaging material;
Fig. 2 shows an alternative embodiment of an apparatus, comprising a guide;
Fig. 3 is a detail of the embodiment of Fig. 2.

In the following, like elements and aspects carry like reference symbols.

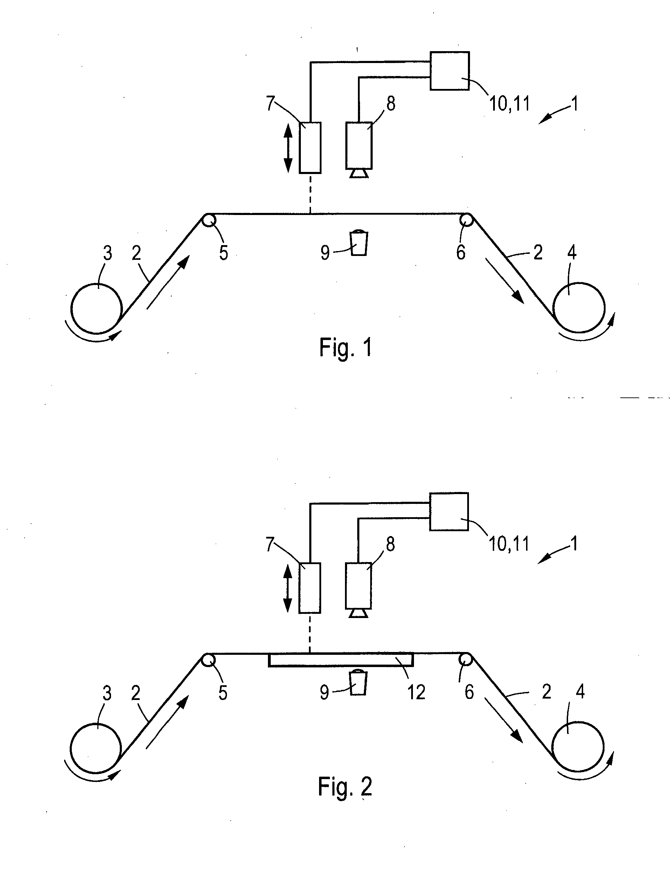

Fig. 1 shows a preferred apparatus 1 for making perforations in a packaging material, in particular a polymer film 2, comprising a supply reel 3, a take-up reel 4, and guides 5, 6 together defining a conveyor for transporting the film 2 along a path through the apparatus 1. Suitable polymer films are generally known and include films made of polyethylene, polypropylene, polyester, polyamide, and cellophane, in monolayers and laminates.

The apparatus 1 further comprises a laser device, in this example a laser device 7, with adjustable focal point, and an in-line detector, in this example a digital camera 8, for measuring one or more parameters of the perforations made with the laser. A light source 9 is positioned opposite the digital camera 8, i.e. on the other side of the film, to improve the signal to noise ratio of the information obtained with the camera. The laser device 7 and the digital camera 8 are connected to a controller 10. In this example, the laser device comprises a lens and the focal point of the laser device can be adjusted by moving the lens up or down, e.g. by rotating it. In an alternative embodiment, the entire laser device can be moved up and down (as indicated by the double arrow).

When a new roll of packaging film has been positioned on the supply reel and fed through the apparatus along the conveyor path to the take-roll, a pre-production run is started, wherein by means of the controller the position of the focal point of the laser device is varied with respect to the packaging material in a plurality of increments, in this example twenty steps of 10 µm each, and the laser device is operated to make a plurality of perforations, e.g. five perforations at each increment. Within the framework of the present invention, the perforations typically have a diameter in a range from 25 to 250 µm, which are common sizes for packages containing average amounts, e.g. two to four portions, of produce, e.g. lettuce or broccoli.

A digital image is formed of each of the perforations and the surface area of each of the perforation is measured by counting the image pixels defining the perforation. Subsequently, the controller calculates the standard deviation of the surfaces of the perforations at each increment. If few, e.g. one or two, perforations are made at each increment or more information is needed for other reasons, the controller calculates the standard deviation of the surfaces of the perforations over a range of increments, e.g. by including at each increment the surfaces measured at the previous and the next increment. After that, the controller determines at which increment the standard deviation of the measured parameter is smallest and adjusts the focus of the laser device to the position relative to the film where the standard deviation is smallest. The laser beam is now properly focussed on the film.

In a next step, the intensity of the laser beam is adjusted. If the surface area of the holes is smaller or larger than a preselected value appropriate for the packaging material concerned, the power of the beam is increased or decreased respectively in one or more increments until the preselected size is obtained. When the preselected size is obtained, production commences. During production, the camera and the controller continuously monitor and adjust the power of the laser to obtain perforations of the preselected size.

This example illustrates how focussing of the beam and adjusting the power of the_beam is carried out by means of the in-line digital camera. The time required to adjust focus is significantly reduced and uniformity of the perforations is increased.

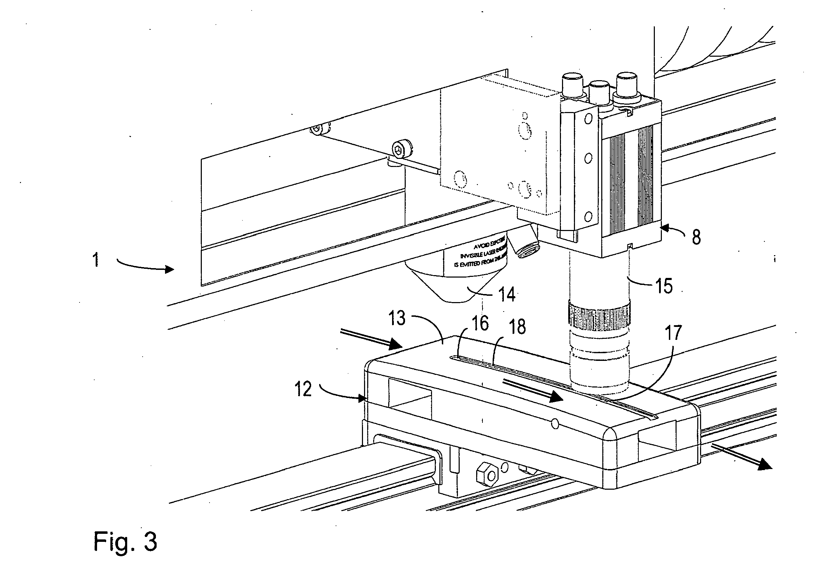

Figs. 2 and 3 show an apparatus 1 comprising an optional support 12 in the conveyor path (indicated with open arrows in Fig. 3) having a surface 13. Fig. 3 shows the support 12, a lens 14 of the laser device 7 and the camera 8 comprising a lens 15.

At least a portion of the film 2 is guided over and supported by the surface 13 of the support 12 at or near the position of the laser 7 and/or the camera 8, preferably in both positions as shown here. Thus, definition of the position of the film 2 with respect to the position of the laser focus and/or the camera focus is improved.

Preferably, the film 2 is taut over the support 12, for which (part of) the support 12 and/or one or more guides 5, 6 may be adjustable, e.g. in height and/or parallel to the film 2, e.g. for particular films and/or positions of (the holes in) the film 2.

The supporting surface 13 of the support 12 may have a predetermined curvature. The (supporting surface 13 of the) support 12 preferably comprises a smooth, hard and/or low friction surface, e.g. comprising polished metal, high-density polyethylene (HDPE) and/or polytetrafluorethene (PTFE, Teflon®) and may have rounded edges. This may prevent harming the film 2 (see Fig. 3).

Fig. 3 shows a recess or an opening 16 in the support receiving the beam of the laser 7, preventing interaction between (the surface 13 of) the support 12, the laser focus and/or (molten) material of the film 2, also providing eye safety for an operator of the apparatus 1.

A further opening 17 in (the surface of) the support 12 is arranged below the camera lens 15 with the light source 9 arranged below it, possibly within the support 12 (not shown), so as to provide optical access to the film 2 from both upper and lower sides. The light source 9 may be arranged remote from the camera 8 and an optical beam line may be provided, e.g. one or more mirrors, light guides and/or optical fibers to deliver the light to the desired position, e.g. to prevent interaction between the light source and the film, e.g. heat from a lamp which might affect the film 2. A light-emitting diode (LED) may provide strong illumination at little generated heat and in a small volume and may be arranged in the support 12.

The support 12 comprises a slot 18 in or through the support surface 13, which is arranged along at least part of the intended path of a perforation and which crosses the laser beam, overlapping its position, and which preferably has dimensions wider than that of the diameter of the perforations to be made. This prevents deforming and/or closing perforations by smearing still-molten material from the edges of freshly-made perforations improving quality and repeatability. It also assists providing and maintaining a clean support surface 13 and film 2.

As an alternative, not shown, instead of a single support 12 two support portions adjacent each other may be provided, which may be separated from each other for forming a slot between them for receiving the laser beam, providing optical access to the film 2 from opposite sides and/or preventing deforming and/or closing perforations. The support portions may be adjustable individually or together.

The invention is not restricted to the above-described embodiments which can be varied in a number of ways within the scope of the claims.

## Claims

1. Apparatus (1) for making perforations with a laser beam in a packaging material, in particular a polymer film (2), comprising a conveyor for transporting the packaging material (2) along a path through the apparatus (1), a laser device (7) with adjustable focal point, and an in-line detector for measuring one or more parameters of the perforations made by the laser beam **characterised in that** the in-line detector is an in-line optical detector (8), e.g. a digital camera, for measuring said one or more parameters of the perforations made with the laser beam, wherein the parameter(s) is or includes the diameter, surface area and/or circumference of the perforations, **and further characterised by** a controller (10) connected to the laser device (7) and the detector (8) and arranged to adjust the focal point of the laser device (7) on the packaging material based on the parameter(s).

2. Apparatus (1) according to claim 1, wherein the controller (10) is arranged to vary the focal point of the laser device (7) in a plurality of increments and operate the laser device (7) to make at least one perforation at each increment.

3. Apparatus (1) according to claim 2, wherein the controller (10) is arranged to calculate an average and/or standard deviation of the values of the parameter(s) measured at each increment and/or over a range of increments.

4. Apparatus (1) according to any one of the preceding claims, wherein the detector (8) and the laser device (7) are coupled such that their focal points are on a line that extends parallel to the packaging material (2).

5. Apparatus (1) according to any one of the preceding claims, comprising a controller (11) connected to the laser device (7) and the detector (8) and arranged to adjust the power of the laser device (7) based on the parameter or one or more of the parameters.

6. Apparatus (1) according claim 5, wherein the controller (11) is arranged to vary the power of the laser device (7) in a plurality of increments and operate the laser device (7) to make at least one perforation at each increment.

7. Apparatus (1) according to claim 6, wherein the controller is arranged to adjust the power of the laser device (7) also during production.

8. Apparatus (1) according to any one of the preceding claims, comprising a support (12) for supporting the film (2) at or near the position of the laser (7) and/or the camera (8), and wherein in particular the support (12) may comprise a supporting surface (13) having a predetermined curvature.

9. Apparatus (1) according to claim 8, wherein the support (12) comprises a slot (18) in or through the support surface (13), which is arranged along at least part of the intended path of a perforation and crossing the beam.

10. Method of adjusting an apparatus (1) according to the preamble of claim 1 comprising the steps of
making a plurality of perforations in the packaging material (2) by means of the laser device (7),
measuring one or more parameters of the perforations with the in-line detector (8), **characterised in that** the detector is an optical detector and the parameter(s) is or includes the diameter, surface area and/or circumference of the perforations and
adjusting the focal point of the laser device (7) on the packaging material based on the parameter(s).

11. Method according to claim 10, comprising varying the focal point of the laser device (7) in a plurality of increments
determining at which increment the packaging material (2) is in focus of the laser device (7), and
adjusting the focal point of the laser device (7) to that increment.

12. Method according to claim 10 or 11, comprising calculating an average and/or the standard deviation of the values of the parameter(s) measured.

13. Method according to any one of the claims 10-12, comprising, preferably after adjusting the focal point of the laser device (7), adjusting the power of the laser device (7) based on the parameter or one or more of the parameters.

14. Method according to claim 10, comprising varying the power of the laser device (7) in a plurality of increments and determining at which increment the perforations have a preselected size.

## Patentansprüche

1. Einrichtung (1) zum Erstellen von Perforationen mit einem Laserstrahl in einem Verpackungsmaterial, insbesondere einem Polymerfilm (2), aufweisend eine Fördervorrichtung zum Transportieren des Verpackungsmaterials (2) entlang eines Pfads durch die Einrichtung (1), eine Laservorrichtung (7) mit einem einstellbaren Fokuspunkt, und einem In-Linie-Detektor zum Messen eines oder mehrerer Parameter der von dem Laserstrahl erstellten Perforationen, **dadurch gekennzeichnet, dass** der In-Linie-Detektor ein In-Linie-Optischer-Detektor (8), z.B. eine Digitalkamera, ist zum Messen des einen oder der mehreren Parameter der von dem Laserstrahl erstellten Perforationen, wobei der(die) Parameter ist oder umfasst den Durchmesser, den Flächenbereich und/oder den Umfang der Perforationen, **und ferner gekennzeichnet durch** eine Steuervorrichtung (10), die mit der Laservorrichtung (7) und dem Detektor (8) verbunden ist und die eingerichtet ist, um den Fokuspunkt der Laservorrichtung (7) auf dem Verpackungsmaterial einzustellen basierend auf dem(den) Parameter(n).

2. Einrichtung (1) gemäß Anspruch 1, wobei die Steuervorrichtung (10) eingerichtet ist, um den Fokuspunkt der Laservorrichtung (7) in einer Mehrzahl von Schritten zu variieren und die Laservorrichtung (7) zu betreiben, um wenigstens eine Perforation bei jedem Schritt zu erstellen.

3. Einrichtung (1) gemäß Anspruch 2, wobei die Steuervorrichtung (10) eingerichtet ist, um einen Durchschnitt und/oder eine Standardabweichung der Werte des(der) Parameter zu berechnen, der(die) bei jedem Schritt und/oder über einen Bereich von Schritten gemessen wurde(n).

4. Einrichtung (1) gemäß irgendeinem der vorhergehenden Ansprüche, wobei der Detektor (8) und die Laservorrichtung (7) derart gekuppelt sind, dass ihre Fokuspunkte auf einer Linie sind, die sich parallel zu dem Verpackungsmaterial (2) erstreckt.

5. Einrichtung (1) gemäß irgendeinem der vorhergehenden Ansprüche, aufweisend eine Steuervorrichtung (11), die mit der Laservorrichtung (7) und dem Detektor (8) verbunden ist und die eingerichtet ist, um die Leistung der Laservorrichtung (7) einzustellen basierend auf dem Parameter oder einem oder mehreren von den Parametern.

6. Einrichtung (1) gemäß Anspruch 5, wobei die Steuervorrichtung (11) eingerichtet ist, um die Leistung der Laservorrichtung (7) in einer Mehrzahl von Schritten zu variieren und die Laservorrichtung (7) zu betreiben, um wenigstens eine Perforation bei jedem Schritt zu erstellen.

7. Einrichtung (1) gemäß Anspruch 6, wobei die Steuervorrichtung eingerichtet ist, um die Leistung der Laservorrichtung (7) auch während der Produktion einzustellen.

8. Einrichtung (1) gemäß irgendeinem der vorhergehenden Ansprüche, aufweisend eine Halterung (12) zum Halten des Film (2) an oder nahe der Position des Lasers (7) und/oder der Kamera (8), und wobei insbesondere die Halterung (12) eine Haltefläche (13) mit einer vorbestimmten Krümmung aufweisen kann.

9. Einrichtung (1) gemäß Anspruch 8, wobei die Halterung (12) einen Schlitz (18) in der oder durch die Haltefläche (13) hindurch aufweist, welcher entlang wenigstens eines Teils des vorgesehenen Pfads einer Perforation und den Strahl kreuzend angeordnet ist.

10. Verfahren zum Einstellen einer Einrichtung (1) gemäß dem Oberbegriff von Anspruch 1, aufweisend die Schritte des Erstellens einer Mehrzahl von Perforationen im Verpackungsmaterial (2) mittels der Laservorrichtung (1), Messens eines oder mehrerer Parameter der Perforationen mit dem In-Linie-Detektor (8), **dadurch gekennzeichnet, dass** der Detektor ein optischer Detektor ist und der(die) Parameter ist oder umfasst den Durchmesser, den Flächenbereich und/oder den Umfang der Perforationen, und
Einstellens des Fokuspunkts der Laservorrichtung (7) auf dem Verpackungsmaterial basierend auf dem(den) Parameter(n).

11. Verfahren gemäß Anspruch 10, aufweisend Variieren des Fokuspunkts der Laservorrichtung (7) in einer Mehrzahl von Schritten,
Ermitteln, bei welchem Schritt das Verpackungsmaterial (2) im Fokus der Laservorrichtung (7) ist, und
Einstellen des Fokuspunkts der Laservorrichtung (7) auf jenen Schritt.

12. Verfahren gemäß Anspruch 10 oder 11, aufweisend Berechnen eines Durchschnitts und/oder der Standardabweichung der Werte des(der) gemessenen Parameters(er).

13. Verfahren gemäß irgendeinem der Ansprüche 10-12, aufweisend, bevorzugt nach dem Einstellen des Fokuspunkts der Laservorrichtung (7), Einstellen der Leistung der Laservorrichtung (7) basierend auf dem Parameter oder einem oder mehreren von dem Parametern.

14. Verfahren gemäß Anspruch 10, aufweisend Variieren der Leistung der Laservorrichtung (7) in einer Mehrzahl von Schritten und Ermitteln, bei welchem Schritt die Perforationen eine vorgewählte Größe haben.

## Revendications

1. Appareil (1) pour réaliser des perforations avec un faisceau laser dans un matériau de conditionnement, en particulier un film polymère (2), comprenant un convoyeur pour transporter le matériau de conditionnement (2) le long d'une trajectoire à travers l'appareil (1), un dispositif laser (7) à point focal réglable, et un détecteur en ligne pour mesurer un ou plusieurs paramètres des perforations réalisées par le faisceau laser, et **caractérisé en ce que** le détecteur en ligne est un détecteur optique en ligne (8), par exemple, un appareil-photo numérique, pour mesurer lesdits un ou plusieurs paramètres des performations réalisées avec le faisceau laser, dans lequel le(s) paramètre(s) est ou comprend le diamètre, la surface et/ou la circonférence des perforations, et **caractérisé en outre par** un contrôleur (10) connecté au dispositif laser (7) et au détecteur (8) et conçu pour régler le point focal du dispositif laser (7) sur le matériau de conditionnement sur la base du/des paramètre(s).

2. Appareil (1) selon la revendication 1, dans lequel le contrôleur (10) est conçu pour faire varier le point focal du dispositif laser (7) selon une pluralité d'incréments et actionner le dispositif laser (7) pour qu'il réalise au moins une perforation à chaque incrément.

3. Appareil (1) selon la revendication 2, dans lequel le contrôleur (10) est conçu pour calculer une moyenne et/ou un écart standard des valeurs du/des paramètre(s) mesuré(s) à chaque incrément et/ou sur une plage d'incréments.

4. Appareil (1) selon l'une quelconque des revendications précédentes, dans lequel le détecteur (8) et le dispositif laser (7) sont couplés de telle sorte que leurs points focaux sont sur une ligne qui s'étend parallèlement au matériau de conditionnement (2).

5. Appareil (1) selon l'une quelconque des revendications précédentes, comprenant un contrôleur (11) connecté au dispositif laser (7) et au détecteur (8) et conçu pour régler la puissance du dispositif laser (7) sur la base du paramètre ou d'un ou plusieurs des paramètres.

6. Appareil (1) selon la revendication 5, dans lequel le contrôleur (11) est conçu pour faire varier la puissance du dispositif laser (7) selon une pluralité d'incréments et actionner le dispositif laser (7) pour qu'il réalise au moins une perforation à chaque incrément.

7. Appareil (1) selon la revendication 6, dans lequel le contrôleur est conçu pour régler la puissance du dispositif laser (7) également pendant la production.

8. Appareil (1) selon l'une quelconque des revendications précédentes, comprenant un support (12) pour supporter le film (2) au niveau ou à proximité de la position du laser (7) et/ou de l'appareil-photo (8), et dans lequel en particulier le support (12) peut comprendre une surface de support (13) ayant une courbure prédéterminée.

9. Appareil (1) selon la revendication 8, dans lequel le support (12) comprend une fente (18) à l'intérieur ou à travers de la surface du support (13), qui est conçue le long d'au moins une partie de la trajectoire prévue d'une perforation et croisant le faisceau.

10. Procédé de réglage d'un appareil (1) selon le préambule de la revendication 1, comprenant les étapes de
réalisation d'une pluralité de perforations dans le matériau de conditionnement (2) au moyen du dispositif laser (7),
mesure d'un ou plusieurs paramètres des perforations avec le détecteur en ligne (8), **caractérisé en ce que** le détecteur est un détecteur optique et le(s) paramètre(s) est ou comprend le diamètre, la surface et/ou la circonférence des perforations et
réglage du point focal du dispositif laser (7) sur le matériau de conditionnement sur la base des paramètres.

11. Procédé selon la revendication 10, comprenant
la variation du point focal du dispositif laser (7) selon une pluralité d'incréments,
la détermination de l'incrément auquel le matériau de conditionnement (2) est focalisé par le dispositif laser (7), et
le réglage du point focal du dispositif laser (7) sur cet incrément.

12. Procédé selon la revendication 10 ou 11, comprenant le calcul d'une moyenne et/ou de l'écart standard des valeurs du/des paramètre(s) mesuré(s).

13. Procédé selon l'une quelconque des revendications 10 à 12, comprenant, de préférence après réglage du point focal du dispositif laser (7), le réglage de la puissance du dispositif laser (7) sur la base du paramètre ou d'un ou plusieurs des paramètres.

14. Procédé selon la revendication 10, comprenant la variation de la puissance du dispositif laser (7) selon une pluralité d'incréments et la détermination de l'incrément auquel les perforations ont une taille présélectionnée.
